# EUROPÄISCHE PATENTANMELDUNG

(11) **EP 1 069 661 A1**
(43) Veröffentlichungstag der Anmeldung: **17.01.2001**
(21) Anmeldenummer: 00108830.1
(22) Anmeldetag: 26.04.2000
(51) Int. Cl.: H02B 1/30

(54) **Rahmengestell für einen Schaltschrank**

(30) Priorität: 10.07.1999 DE 19932304
(71) Anmelder: Rittal-Werk Rudolf Loh GmbH & Co. KG, 35745 Herborn (DE)
(72) Erfinder: Hartel, Marc, D-35447 Reiskirchen (DE); Nicolai, Walter, D-35418 Buseck (DE)
(74) Vertreter: Fleck, Hermann-Josef, Dr.-Ing.

(57) **Zusammenfassung**

Die Erfindung betrifft Rahmengestell für einen Schaltschrank mit vertikalen und horizontalen Rahmenprofilen, wobei in wenigstens einem Rahmengestell-Eckbereich zwei der horizontalen Rahmenprofile mittels einer Eckverbindung an ein vertikales Rahmenprofil angeschlossen sind, wobei die beiden horizontalen Rahmenprofile unter Bildung eines Eckwinkels aneinandergeschlossen sind und eine zur Rahmengestell-Außenseite hin geöffnete Aufnahme aufweisen, wobei die Aufnahme symmetrisch zu der den Eckwinkel teilenden Winkelhalbierenden ausgebildet ist, wobei in der Eckverbindung ein Eckverbinder festgelegt ist, wobei das vertikale Rahmenprofil in der Aufnahme unter Zuhilfenahme eines Befestigungsansatzes des Eckverbinders festlegbar ist, wobei das vertikale Rahmenprofil wahlweise symmetrisch oder unsymmetrisch zu der Winkelhalbierenden der Aufnahme ausgebildet sein kann, und wobei der Eckverbinder zur Festlegung des unsymmetrischen Rahmenprofiles ein Angleichstück aufweist.

## Beschreibung

Die Erfindung betrifft ein Rahmengestell für einen Schaltschrank mit vertikalen und horizontalen Rahmenprofilen, wobei in wenigstens einem Rahmengestell-Eckbereich zwei der horizontalen Rahmenprofile mittels einer Eckverbindung an ein vertikales Rahmenprofil angeschlossen sind, wobei die beiden horizontalen Rahmenprofile unter Bildung eines Eckwinkels aneinandergeschlossen sind und eine zur Rahmengestell-Außenseite hin geöffnete Aufnahme aufweisen, wobei die Aufnahme symmetrisch zu der den Eckwinkel teilenden Winkelhalbierenden ausgebildet ist, wobei in der Eckverbindung ein Eckverbinder festgelegt ist, wobei das vertikale Rahmenprofil in der Aufnahme unter Zuhilfenahme eines Befestigungsansatzes des Eckverbinders festlegbar ist, wobei das vertikale Rahmenprofil wahlweise symmetrisch oder unsymmetrisch zu der Winkelhalbierenden der Aufnahme ausgebildet sein kann, und wobei der Eckverbinder zur Festlegung des unsymmetrischen Rahmenprofiles ein Angleichstück aufweist.

Ein derartiges Rahmengestell ist aus der DE 196 47 791 A1 bekannt. Diese Druckschrift zeigt ein Rahmengestell, bei dem die horizontalen Tiefen- und Breitenstreben endseitig mit einem Gehrungsschnitt versehen sind. Zur Ausbildung eines Boden- und eines Deckrahmens sind je zwei Tiefen- und Breitenstreben an diesem Gehrungsschnitt aneinandergesetzt. In den Eckbereichen des Boden-/Deckrahmens entstehen Aufnahmen, in die Eckverbinder eingeschweißt sind. Die Eckbverbinder stehen mit Befestigungsansätzen über den Boden-/Deckrahmen vor. An den Befestigungsansätzen können die vertikalen Rahmenprofile angebaut werden. Abhängig vom Anwendungsfall werden als vertikale Rahmenprofile wahlweise symmetrische oder unsymmetrische vertikale Rahmenprofile verbaut. Damit lassen sich unterschiedliche lichte Weiten zwischen zwei benachbarten vertikalen Rahmenprofilen verwirklichen. Wenn bei einem bestehenden Rahmengestell symmetrische gegen unsymmetrische vertikale Rahmenprofile getauscht werden sollen, so ist dies nicht einfach möglich. Hierzu muß nämlich das gesamte Rahmengestell demontiert werden. Erst dann lassen sich die, als Holkammerprofile ausgebildeten, unsymmetrischen, vertikalen Rahmenprofile mit ihren Hohlkammern auf den Befestigungsansatz des Eckverbinders aufschieben.

Wie die DE 196 47 791 erkennen läßt, kann das unsymmetrische vertikale Rahmenprofil nicht in die Aufnahme des Boden-/Deckrahmens eingestellt werden. Vielmehr steht es mit seinem stirnseitigen Ende auf den längsseitigen Enden der Tiefen- und Breitenstreben auf. Hierdurch entsteht jedoch in der Aufnahme ein offener Bereich, der aufwendig abgedichtet werden muß.

Es ist Aufgabe der Erfindung, ein Rahmengestell der eingangs erwähnten Art derart weiterzubilden, daß ein einfacher und stabiler Anbau des unsymmetrischen vertikalen Rahmenprofiles ermöglicht ist.

Diese Aufgabe wird dadurch gelöst, daß das unsymmetrische, vertikale Rahmenprofil in Richtung der Winkelhalbierenden in die Aufnahme und an den Befestigungsansatz ansetzbar ist, daß das unsymmetrische, vertikale Rahmenprofil im montierten Zustand mit einer Profilseite an der Stirnseite des in Richtung der Rahmengestelltiefe verlaufenden, als Tiefenstrebe ausgebildeten horizontalen Rahmenprofils anliegt, und diese Stirnseite zumindest teilweise überdeckt, und daß das unsymmetrische, vertikale Rahmenprofil mit einem Ansatz flächig an einer Anschlagfläche des Angleichstückes angeschlagen ist, wobei die Anschlagfläche quer zur Mittellängsachse des als Breitenstrebe ausgebildeten, in Rahmengestell-Breitenrichtung verlaufenden, horizontalen Rahmenprofiles verläuft.

Der Anbau des unsymmetrischen vertikalen Rahmenprofiles kann nun ebenso wie das symmetrische von der Außenseite des Rahmengestelles in die Aufnahme eingesetzt und dann an dem Befestigungsansatz festgemacht werden. Dies ermöglicht es, daß die Umrüstung der verschiedenen Arten von vertikalen Rahmenprofilen einfach durchgeführt werden kann, da das Rahmengestell nicht mehr komplett zerlegt werden muß. Das unsymmetrische vertikale Rahmenprofil kann in der Aufnahme stabil fixiert werden, da es flächig an der Stirnseite der Tiefenstrebe und auch an der Anschlagfläche des Angleichstückes anschlägt. Dadurch, daß das unsymmetrische vertikale Rahmenprofil in die Aufnahme satt eingestellt werden kann, wird diese gut ausgefüllt, aufwendige Abdichtmaßnahmen entstehen dann nicht.

Zur Verringerung des Teile- und Handhabungsaufwandes kann es vorgesehen sein, daß das Angleichstück einteilig an den Eckverbinder für das unsymmetrische, vertikale Rahmenprofil angeformt ist. Ein besonders stabiles Rahmengestell läßt sich dann ausbilden, wenn vorgesehen ist, daß die Tiefenstrebe mittels des Eckverbinders an die Breitenstrebe angebunden, vorzugsweise angeschweißt ist.

Eine bevorzugte Erfindungsvariante ist dadurch gekennzeichnet, daß der Eckverbinder ein Basisteil aufweist, das mit Befestigungsansätzen stirnseitig in die von der Tiefen- und der Breitenstrebe umschlossenen Hohlkammern eingesetzt ist. Mit den Befestigungsansätzen kann der Eckverbinder gegenüber den Tiefen- und Breitenstreben ausgerichtet werden. Darüberhinaus können die Befestigungsansätze auch dazu verwendet werden, die Abdichtung der Eckverbindung zu verbessern.

Zur Ausbildung einer Transportmöglichkeit mittels derer der Schaltschrank gehandhabt werden kann, kann vorgesehen sein, daß die Tiefen- und die Breitenstrebe im Bereich der stirnseitgen Enden Teilaussparungen aufweisen, die sich im Montagezustand zu einem gemeinsamen Durchbruch vereinigen, und daß dieser Durchbruch fluchtend zu einer Aufnahme des Eckverbinders angeordnet ist, die durch den Durchbruch hindurch von der Rahmengestell-Außenseite her zugänglich ist. Die Aufnahme kann dann beispielsweise eine Gewindeaufnahme sein, in die eine Transportöse einschraubbar ist.

Um das unsymmetrische vertikale Rahmenprofil exakt gegenüber der Tiefen- und der Breitenstrebe ausrichten zu können, sieht eine Erfindungsvariante vor, daß der Eckverbinder zwei zur Außenseite des Rahmengestelles gewandte Stützflächen aufweist, die zueinander im Winkel stehen und an denen das vertikale Rahmenprofil mit Gegenflächen ausgerichtet ist. Dabei kann es auch insbesondere vorgesehen sein, daß der Befestigungsansatz ein Befestigungsstück aufweist, das einen auskragenden Vorsprung aufweist, und daß der Vorsprung einen Hinterschnitt des vertikalen Rahmenprofiles hintergreift.

Abhängig von den Einbaugegebenheiten im Schaltschrank-Innenraum, bzw. den Platzverhältnissen in der Umgebung, kann es vorgesehen sein, daß das vertikale Rahmenprofil von der Rahmengestell-Außenseite und/oder von der Rahmengestell-Innenseite her mit dem Eckverbinder verschraubt ist. Die wahlweise innen oder außenseitige Fixiermöglichkeit bietet dem Monteur bei eingeschränkten räumlichen Gegebenheiten eine Montageerleichterung.

Die innenseitige Befestigung des vertikalen unsymmetrischen Rahmenprofiles kann dabei dergesetalt sein, daß das vertikale Rahmenprofil eine rechtwinklig, von der an der Tiefenstrebe anliegenden Profilseite abgebogene weitere Profilseite aufweist, die dem Rahmengestell-Innenraum zugewandt ist, daß die beiden Profilseiten mit Reihen von Befestigungsaufnahmen versehen sind, und daß der Befestigungsansatz des Eckverbinders von der Innenseite des Rahmengestelles her mit der innenseitigen Profilseite verschraubt ist. Zur außenseitigen Montage kann es vorgesehen sein, daß das vertikale Rahmenprofil einen senkrecht zur Winkelhalbierenden der Aufnahme verlaufenden Verbindungsabschnitt aufweist, der an seiner Innenseite an dem Eckverbinder anliegt und der von der Außenseite des Rahmengestelles her mit dem Eckverbinder verschraubt ist.

Die Erfindung wird im Folgenden anhand eines in der Zeichnung dargestellten Ausführungsbeispiels näher erläutert. Es zeigen:
- Fi. 1: in perspektivischer Explosionsansicht und Teildarstellung einen Eckbereich eines Rahmengestelles für einen Schaltschrank,
- Fig. 2.: die Darstellung gem. Fig. 1 in teilweise zusammengebauten Zustand,
- Fig.3: die Darstellung gemäß den Fig. 1 und 2 in zusammengebautem Zustand, und
- Fig. 4: die Eckverbindung gem. den Fig. 1 bis 3 in Ansicht von der Innenseite des Rahmengestelles her.

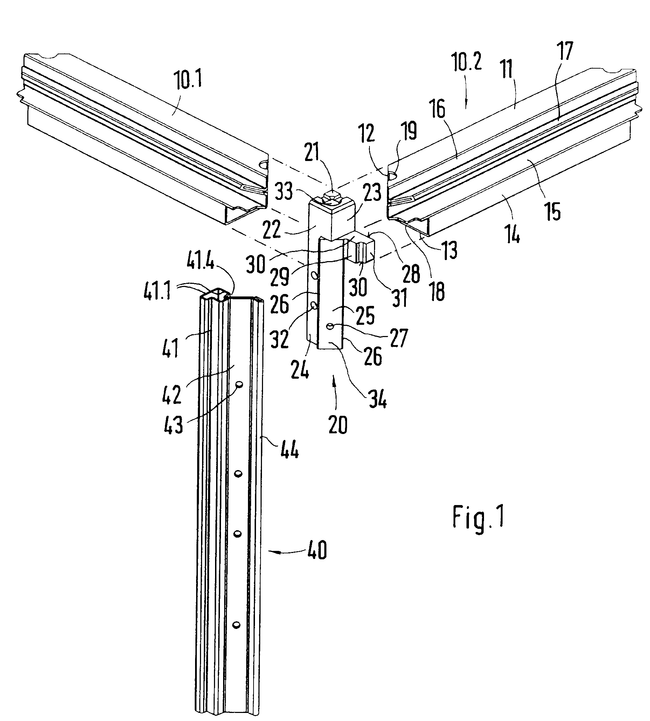

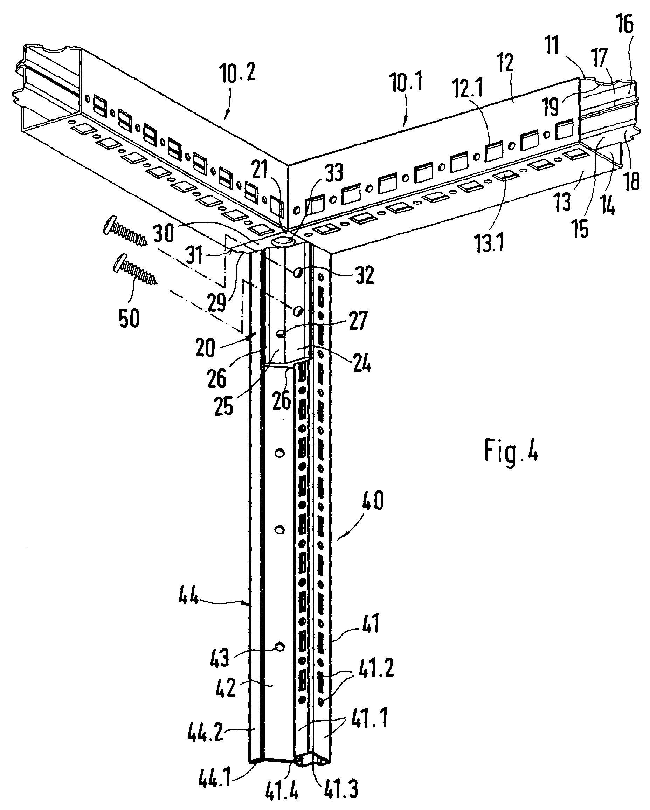

In der Fig. 1 ist ein Rahmengestell eines Schaltschrankes dargestellt. Das Rahmengestell ist aus horizontalen und vertikalen Rahmenprofilen zusammengesetzt. Die horizontalen Rahmenprofile bilden dabei Tiefenstreben 10.1 und Seitenstreben 10.2. Die Tiefen- und Breitenstreben 10.1 und 10.2 sind querschnittsgleich aufgebaut. Jeweils zwei Tiefen- und zwei Breitenstreben 10.1 und 10.2 können zu einem Boden- und einem Deckrahmen zusammengesetzt werden. Aus der Fig. 1 ist die teilweise Darstellung eines Deckrahmens ersichtlich. Die horizontalen Rahmenprofile (Tiefenstreben 10.1 und Breitenstreben 10.2) weisen einen oberen Deckabschnitt 11 auf, der an seinem, dem Rahmengestell-Innenraum zugewandten Bereich rechtwinklig in eine Profilseite 12 übergeht. Von der Profilseite 12 ist eine Profilseite 13 abgebogen, die ebenfalls dem Innenraum des Rahmengestelles zugewandt ist. Die Fig. 4 läßt erkennen, daß die beiden Profilseiten 12 und 13 mit Reihen von Befestigungsaufnahmen 12.1 und 13.1 versehen sind. Aus der Fig. 1 kann weiter entnommen werden, daß die Profilseite 13 in einen äußeren Dichtsteg 14 übergeht. Der Dichtsteg 14 ist rechtwinklig von der Profilseite 13 abgebogen. An den Dichtsteg 14 schließt sich eine Abkantung 15 rechtwinklig an. Die Abkantung 15 steht parallel zu der Profilseite 13. Der Deckabschnitt 11 und die Abkantung 15 sind mittels einer vertikalen Wandung 16 verbunden. Die Wandung 16 bildet einen Vorsprung 17 aus, der in Form eines doppelt gefalteten Lappens von der Wand 16 vorsteht und im Winkel zu dieser angeordnet ist. Der Vorsprung 17, der über die gesamte Längserstreckung des horizontalen Rahmenprofiles verläuft, dient als Regenrinne. Über diese Regenrinne kann Wasser, welches deckseitig vom Schaltschrank abläuft, abgeleitet werden.

Die Tiefen- und die Breitenstreben 10.1 und 10.2 sind endseitig mit Gehrungsschnitten versehen. Zur Ausbildung des Eckbereiches können die Tiefen- und die Breitenstreben 10.1 und 10.2 an diesen Gehrungsschnitten aneinandergesetzt werden. Bevor die horizontalen Rahmenprofile gefügt werden, wird ein Eckverbinder 20 in die Hohlkammern der Tiefen- und Breitenstrebe 10.1 und 10.2 eingesetzt. Hierzu weist der Eckverbinder 20 ein Basisteil 21 auf. Das Basisteil 21 weist Befestigungsansätze auf, die in die Hohlkammern teilweise eingeschoben werden können. Im eingeschobenen Zustand liegt das Basisteil 21 mit Anlageflächen 22, 23 an Innenwandungen der Tiefen- und Breitenstrebe 10.1 und 10.2 an. Im vorliegenden Ausführungsbeispiel liegen die Anlageflächen 22, 23 an den Wandungen 16 der Tiefen- und Breitenstrebe 10.1 und 10.2 an. Die aus Tiefen- und Breitenstrebe 10.1 und 10.2 und Eckverbinder 20 gebildete Einheit kann zur abschließenden Fixierung verschweißt oder auch verschraubt werden. Wie die Fig. 1 erkennen läßt, weisen die Tiefen- und die Breitenstrebe 10.1 und 10.2 im Bereich ihrer stirnseitigen Enden Teil-Aussparungen 19 auf. Diese beiden Teil-Aussparungen 19 setzen sich zu einer gemeinsamen Aussparung zusammen. Diese gemeinsame Aussparung steht in Flucht mit einer Aufnahme 33, die in das Basisteil 21 des Eckverbinders 20 als Gewindeaufnahme eingebracht ist.

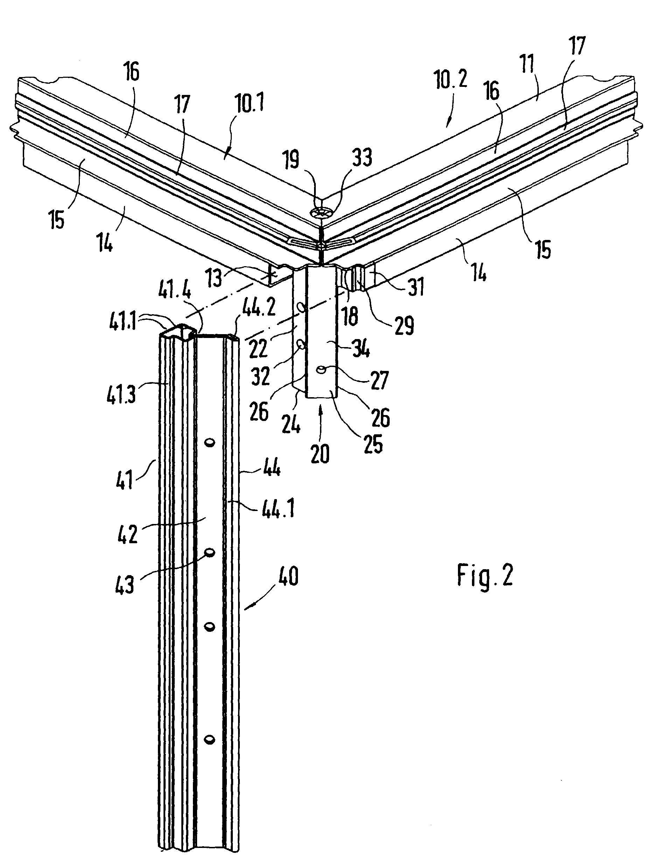

Im Anschluß an das Basisteil 21 weist der Eckverbinder0 20 ein Angleichstück 30 auf. Das Angleichstück 30 liegt mit einer ebenen Abschlußfläche auf dem Rand auf, der von den beiden Profilseiten 12 und 13 und dem Dichtsteg 14 gebildet ist. Der Dichtsteg 14 geht dann bündig in eine Fläche des Angleich-Ostückes 13 über, die als Dichtstegverlängerung 31 ausgebildet ist (s. Fig. 2).

Wie die Fig. 2 erkennen läßt, weist das Angleichstück 30 eine Anschlagfläche 29 auf, die parallel beabstandet zu der Abschlußfläche 28 angeordnet ist. Die Anschlagfläche 29 geht über eine Außenprofilierung in die Dichtstegverlängerung 31 über. Fig. 2 läßt erkennen, daß die Außenprofilierung an eine Ausklinkung 18 der Breitenstrebe 10.2 angepaßt ausgebildet ist. Die Ausklinkung 18 ist aus der Abkantung 15 der Breitenstrebe 10.2 ausgenommen. Die Tiefenstrebe 10.1 weist ebenso eine solche Ausklinkung 18 auf.

Die Fig. 1 läßt erkennen, daß sich an das Basisteil 21 des Eckverbinders 20 ein Befestigungsansatz 24 anschließt. Der Befestigungsansatz 24 ist einstückig mit dem Angleichstück 30 verbunden und überragt dieses. Der Befestigungsansatz 24 ist mit einem Befestigungsstück 25 versehen, das eine vertikale Stützfläche 34 aufweist. Die Stützfläche 34 steht im Winkel zu einer weiteren Stützfläche des Befestigungsansatzes 24, die sich aus der Verlängerung der Anlagefläche 22 des Basisteils 21 ergibt. Diese verlängerte Anlagefläche ist mit zwei Befestigungsaufnahmen 32 versehen. In die Stützfläche 34 ist ebenfalls eine Befestigungsaufnahme 27 eingearbeitet. Die Stützfläche 34 des Befestigungsstückes 25 ist an ihrem, der Anlagefläche 22 zugewandten Rand mit einem Vorsprung 26 versehen. Der im Querschnitt keilförmige Vorsprung überragt die Anlagefläche 22.

Wie die Fig. 2 erkennen läßt, dient der Befestigungsansatz 24 zur Anbindung eines vertikalen Rahmenprofiles 40. Dieses Rahmenprofil 40 kann in die Aufnahme eingesetzt werden, die von der Tiefen- und der Breitenstrebe 10.1 und 10.2 gebildet wird. Die Aufnahme wird dabei zunächst von den stirnseitigen Enden der Tiefen- und Breitenstrebe 10.1 und 10.2 begrenzt, wobei zwischen den beiden Stirnseiten ein Eckwinkel von 90° eingeschlossen ist. Die Aufnahme ist symmetrisch zu der Winkelhalbierenden dieses Eckwinkels ausgebildet.

Das vertikale Rahmenprofil 40 ist bzgl. dieser Winkelhalbierenden unsymmetrisch ausgebildet. Es weist einen flächigen Verbindungsabschnitt 42 auf, an dessen beiden vertikalen Längskanten Ansätze 41 und 44 angeordnet sind. Der Ansatz 41 weist zwei dem Innenraum des Rahmengestelles zugekehrte Profilseiten 41.1 auf. Wie die Fig. 4 erkennen läßt, sind diese beiden Profilseiten 41.1 mit Reihen von Befestigungsaufnahmen 41.2 versehen. Die dem Verbindungsabschnitt 42 zugewandte Profilseite 41.1 geht in den Verbindungsabschnitt 42 über einen schwalbenschwanzfärmigen Hinterschnitt 41.4 über. Im Bereich der Außenseite des vertikalen Rahmenprofiles 40 geht die zweite Profilseite 41.1 über eine Außenprofilierung 41.3 in den Verbindungsabschnitt 42 über.

Der Ansatz 44 wird von einer Abkantung 44.1 gebildet, die im Winkel von dem Verbindungsabschnitt 42 abgebogen ist. Von der Abkantung 44.1 ist ein Falz 44.2 um 180° abgebogen. Der Falz 44.2 liegt innenseitig an der Abkantung 44.1 an.

Zur Komplettierung der Eckverbindung wird das vertikale Rahmenprofil 40 im Bereich seines stirnseitigen Endes in die Aufnahme der Eckverbindung eingesetzt. Wie die strichpunktierten Linien in Fig. 2 andeuten, kann die Einsetzbewegung von der Außenseite des Rahmengestelles her erfolgen. Das vertikale Rahmenprofil schlägt mit seiner parallel zu dem Dichtsteg 14 der Tiefenstrebe 10.1 verlaufenden Profilseite 41.1 an der Anlagefläche 22 des Befestigungsansatzes 24 an. Der Verbindungsabschnitt 42 liegt an der Stützfläche 34 des Befestigungsstückes 25 an. Im montierten Zustand greift der Vorsprung 26 des Befestigungsstückes 25 in den schwalbenschwanzförmigen Hinterschnitt 41.4 des vertikalen Rahmenprofiles 40 ein.

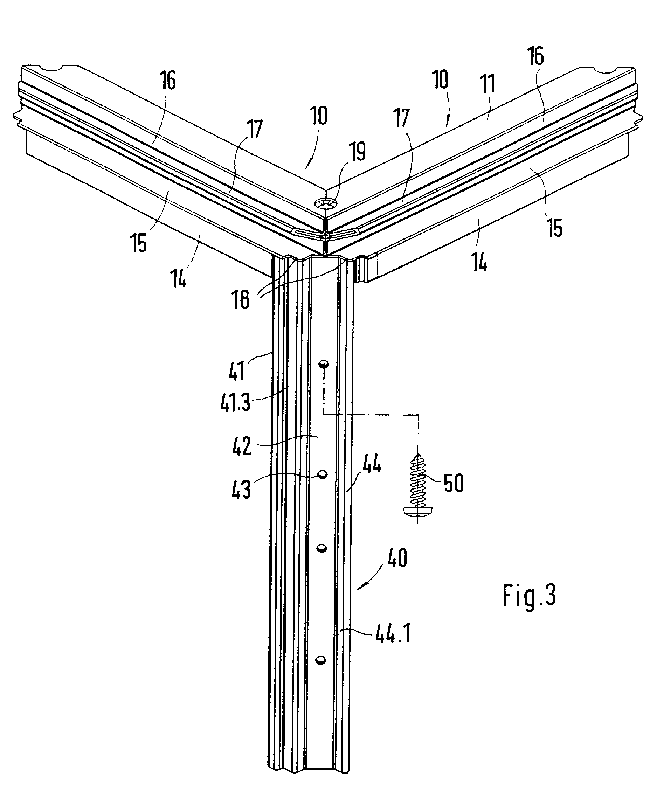

Wie die Fig. 3 erkennen läßt, geht das vertikale Rahmenprofil in den Außenbereich, der von der Außenprofilierung 41.3, dem Verbindungsabschnitt 42 und der Abkantung 44.1 gebildet wird, bündig in die Ausklinkungen 18 der Tiefen- und Breitenstrebe 10.1 und 10.2 über. Die Befestigung des vertikalen Rahmenprofiles 40 an dem Eckverbinder 20 kann von der Außen- und/oder der Innenseite des Rahmengestelles her erfolgen. Fig. 3 zeigt die Befestigung des vertikalen Rahmenprofiles 40 von der Rahmengestell-Außenseite her. Wie diese Darstellung erkennen läßt, kann eine Befestigungsschraube 50 durch eine Befestigungsaufnahme 43 des Verbindungsabschnittes 42 hindurchgeführt und in die Befestigungsaufnahme 27 des Befestigungsstückes 25 des Eckverbinders 20 eingeschraubt werden (oder gegebenenfalls im Bereich hinter dem Befestigungsstück mit einer Mutter gekontert werden).

Die Vorgehensweise zur innenseitigen Befestigung des vertikalen Rahmenprofiles 40 läßt sich der Fig. 4 entnehmen. Hierzu werden zwei Befestigungsschrauben 50 in die Befestigungsaufnahmen 32 des Befestigungsansatzes 24 eingesteckt und in die zugehörigen Befestigungsaufnahmen 41.2 der Profilseite 41.1 des vertikalen Rahmenprofiles 40 eingeschraubt.

Wie auch aus den Fig. 1 bis 4 leicht erkennbar ist, kann das unsymmetrische vertikale Rahmenprofil 40 auf einfache Weise an ein bestehendes Rahmengestell angebaut oder von diesem abmontiert werden. Hierzu müssen lediglich die Verbindungen (Befestigungsschrauben 50) gelöst werden. Dann kann das vertikale Rahmenprofil an seinen beiden stirnseitigen Enden aus den boden- und deckseitigen Aufnahmen herausgezogen werden.

## Patentansprüche

1. Rahmengestell für einen Schaltschrank mit vertikalen und horizontalen Rahmenprofilen, wobei in wenigstens einem Rahmengestell-Eckbereich zwei der horizontalen Rahmenprofile mittels einer Eckverbindung an ein vertikales Rahmenprofil angeschlossen sind, wobei die beiden horizontalen Rahmenprofile unter Bildung eines Eckwinkels aneinandergeschlossen sind und eine zur Rahmengestell-Außenseite hin geöffnete Aufnahme aufweisen, wobei die Aufnahme symmetrisch zu der, den Eckwinkel teilenden Winkelhalbierenden ausgebildet ist, wobei in der Eckverbindung ein Eckverbinder festgelegt ist, wobei das vertikale Rahmenprofil in der Aufnahme unter Zuhilfenahme eines Befestigungsansatzes des Eckverbinders festlegbar ist, wobei das vertikale Rahmenprofil wahlweise symmetrisch oder unsymmetrisch zu der Winkelhalbierenden der Aufnahme ausgebildet sein kann, und wobei der Eckverbinder zur Festlegung des unsymmetrischen Rahmenprofiles ein Angleichstück aufweist,
dadurch gekennzeichnet,
daß das unsymmetrische vertikale Rahmenprofil (40) in Richtung der Winkelhalbierenden in die Aufnahme und an den Befestigungsansatz (24) ansetzbar ist,
daß das unsymmetrische vertikale Rahmenprofil (40) im montierten Zustand mit einer Profilseite (41.1) an der Stirnseite des in Richtung der Rahmengestelltiefe verlaufenden, als Tiefenstrebe (10) augebildeten horizontalen Rahmenprofils anliegt, und diese Stirnseite zumindest teilweise überdeckt, und
daß das unsymmetrische vertikale Rahmenprofil (40) mit einem Ansatz (44) flächig an einer Anschlagfläche (29) des Angleichstückes (30) angeschlagen ist, wobei die Anschlagfläche (29) quer zur Mittellängsachse des als Breitenstrebe (10.2) ausgebildeten, in Rahmengestell-Breitenrichtung verlaufenden, horizontalen Rahmenprofiles verläuft.

2. Rahmengestell nach Anspruch 1,
dadurch gekennzeichnet,
daß das Angleichstück (30) einteilig an den Eckverbinder (20) für das unsymmetrische, vertikale Rahmenprofil (40) angeformt ist.

3. Rahmengestell nach Anspruch 1 oder 2,
dadurch gekennzeichnet,
daß die Tiefenstrebe (10.1) mittels des Eckverbinders (20) an die Breitenstrebe (10.2) angebunden, vorzugsweise angeschweißt ist.

4. Rahmengestell nach einem der Ansprüche 1 bis 3,
dadurch gekennzeichnet,
daß der Eckverbinder (20) ein Basisteil (21) aufweist, das mit Befestigungsansätzen stirnseitig in die von der Tiefen- und der Breitenstrebe umschlossenen Hohlkammern eingesetzt ist.

5. Rahmengestell nach einem der Ansprüche 1 bis 4,
dadurch gekennzeichnet,
daß die Tiefen- und die Breitenstrebe (10.1 und 10.2) im Bereich der stirnseitgen Enden Teilaussparungen (19) aufweisen, die sich im Montagezustand zu einem gemeinsamen Durchbruch vereinigen, und daß dieser Durchbruch fluchtend zu einer Aufnahme des Eckverbinders (20) angeordnet ist, die durch den Durchbruch hindurch von der Rahmengestell-Außenseite her zugänglich ist.

6. Rahmengestell nach einem der Ansprüche 1 bis 5,
dadurch gekennzeichnet,
daß der Eckverbinder (20) zwei zur Außenseite des Rahmengestelles gewandte Stützflächen (34) aufweist, die zueinander im Winkel stehen und an denen das vertikale Rahmenprofil (40) mit Gegenflächen ausgerichtet ist.

7. Rahmengestefl nach einem der Ansprüche 1 bis 6,
dadurch gekennzeichnet,
daß der Befestigungsansatz (24) ein Befestigungsstück (25) aufweist, das einen auskragenden Vorsprung (26) aufweist, und
daß der Vorsprung (26) einen Hinterschnitt (41.4) des vertikalen Rahmenprofiles (40) hintergreift.

8. Rahmengestell nach einem der Ansprüche 1 bis 7,
dadurch gekennzeichnet,
daß das vertikale Rahmenprofil von der Rahmengestell-Außenseite und/oder von der Rahmengestell-Innenseite her mit dem Eckverbinder (20) verschraubt ist.

9. Rahmengestell nach Anspruch 8,
dadurch gekennzeichnet,
daß das vertikale Rahmenprofil (40) eine rechtwinklig von der an der Tiefenstrebe (10.1) anliegenden Profilseite (41.1) abgebogene weitere Profilseite (41.1) aufweist, die dem Rahmengestell-Innenraum zugewandt ist,
daß die beiden Profilseiten mit Reihen von Befestigungsaufnahmen (41.2) versehen sind, und
daß der Befestigungsansatz (24) des Eckverbinders (20) von der Innenseite des Rahmengestelles her mit der innenseitigen Profilseite (41.1) verschraubt ist.

10. Rahmengestell nach einem der Ansprüche 8 oder 9,
dadurch gekennzeichnet,
daß das vertikale Rahmenprofil (40) einen senkrecht zur Winkelhalbierenden der Aufnahme verlaufenden Verbindungsabschnitt (42) aufweist, der an seiner Innenseite an dem Eckverbinder (20) anliegt und der von der Außenseite des Rahmengestelles her mit dem Eckverbinder (20) verschraubt ist.
